# EUROPEAN PATENT APPLICATION

(11) **EP 2 177 260 A1**
(43) Date of publication of application: **21.04.2010**
(21) Application number: 09172087.0
(22) Date of filing: 02.10.2009
(51) Int. Cl.: B01J 8/00, B01J 8/10

(54) **Systems and methods for continuous multiphase reaction and separation**

(30) Priority: 06.10.2008 US 245961
(71) Applicant: Global Bio-Chem Technology Group Company Limited, Hong Kong (CN)
(72) Inventor: Liu, Jing, 130062, Changchun (CN); Qi, Hongbin, 130062, Changchun (CN); Xu, Zhouwen, 130062, Changchun (CN)
(74) Representative: Lawrence, John

(57) **Abstract**

The present invention relates to a slurry reactor system suitable for continuous multiphase reaction/separation, as well as a method for continuous reaction/separation of a multiphase reaction in a slurry reactor system. The system includes a reaction vessel, a separation device that includes a separation chamber and a filter element, and an agitation device. The filter clement includes a filter, which is in contact with a slurry in the reaction vessel and on the surface of which a solid material from the slurry forms a filter cake in the reaction vessel. The agitation device generates a flow of the slurry in the reaction vessel. A flux of a liquid product from the slurry in the reaction vessel across the filter and into the separation chamber is maintained at a substantially constant level for long term continuous reaction/separation without interruption.

## Description

### Field of Invention

The present invention relates to a slurry reactor system suitable for continuous multiphase reaction/separation. The present invention also relates to a method for continuous reaction/separation of a multiphase reaction in a slurry reactor system.

### Background of the Invention

Slurry reactors are a common type of reactors designed for gas-liquid-solid three-phase reactions. They usually have large volumes to accommodate the reactants (and products) and can effectively remove the heat generated in highly exothermic catalytic reactions to ensure stable operations.

The solid phase in a slurry reactor is often composed of catalyst particles used in the relevant reaction. To minimize the inhomogeneity of their dispersion and to increase the contact area between the catalysts and the reactants, it is desirable to use catalysts with small particle sizes, for example, in the order of tens of microns or even smaller. The small sized catalysts, however, create a difficulty for their separation from a liquid product. Efficient continuous separation of catalysts from a slurry phase within a reaction vessel is a challenging task for designing a slurry reactor.

Methods for separating a liquid product from a slurry phase using a separation unit outside a reactor are widely used. These methods require special slurry pumps to transport the slurry containing solid catalysts from the reactor, and to send the slurry containing a higher concentration of solid catalysts back to the reactor. The catalysts are prone to be broken down, and the pumps, valves, and pipes involved in the external slurry circulation loop are easily worn by the solid catalyst content (being oftentimes metal compounds). These are obstacles to achieving the goal of a long term continuous operation, which is important for large-scale industrial production.

U.S. Patent No. 6,929,754 to Mohedas et al. ("the '754 patent") describes methods and apparatus for removing liquid products from a slurry used in a Fischer-Tropsch reactor. The '754 patent discloses separation of a liquid product from a slurry by drawing the liquid product across a filter medium in a slurry chamber, which is located outside of and connected with the reactor via pipes, valves and pumps that direct the slurry from the reactor to the slurry chamber and back to the reactor. These circulation delivery elements may suffer from abrasion by catalysts (which are often metal compounds) and may need periodic cleaning or replacement. Also, intermittent cessation of the separation step is required to remove catalysts deposited on a substrate in the filter medium.

In existing liquid/solid separation methods using internal filter unit, catalyst particles deposited on the filter units causes clogging over time. The filter units need to be cleaned periodically to remove some of the deposited catalyst particles, and therefore, a continuous reaction/separation is interrupted. For example, U.S. Patent No. 7,008,966 to Degeorge et al. ("the '966 patent") discloses a removable filter for separating and filtering slurry liquid from solid particles. The system disclosed in the '966 patent is only suitable for batched process because of the lack of a mechanism to prevent the common problem of catalyst deposition on the filter. A backwash cycle (to remove the clog of catalyst particles on the filter) is necessary, and the filter needs to be periodically taken out of the reaction vessel in order to remove the catalyst deposition.

WO 94/016807 to Rytter et al. discloses a solid/liquid slurry reaction/separation apparatus comprising a vessel defining a treatment zone, and a filtration section partially surrounding the treatment zone. The buildup of solid particles on the filter (i.e., a filter cake) is prevented by the turbulent motion of the slurry without using an agitation device. To achieve this "self-cleaning" effect, however, the pressure differential between the slurry in treatment zone and the filtration section needs to be kept (typically below 6 mBar) to prevent clogging of the filter. Otherwise, back flushing liquid from the filtration section to the treatment zone is required. A low pressure differential would exert a constraint on the separation efficiency and thus the productivity of the system.

A slurry reactor without an agitation device may be suitable for a Fischer-Tropsch type reaction where homogenous dispersion of gas reactants can be easily achieved. In Fischer-Tropsch type reaction, the reactants are gases and the product is liquid. Therefore, large volume of reactant gases required in Fischer-Tropsch type reaction are sufficient to keep the mixing of gases, liquid and the solid in the slurry. However, for a solid catalyzed reaction involving both a gas reactant and a liquid reactant it is usually preferred to use fixed-bed reactors for continuous operation. The catalyst is held in place and does not move, and the reaction is completed when the gas and liquid reactants pass through the catalyst. However, fixed-bed reactors have poor mass transport and thermal transfer, and the reaction temperature is difficult to control or stabilize. This may lead to an exceeding high reaction temperature, which in turn leads to polymerization of either the reactant or the product. The polymer thus produced may clog the pores in and between the catalyst particles. The high temperature may also lead to change in the crystalline structure of the catalyst and shorten its active life. If a slurry bed is used, mixing gas and liquid reactants is not easily achieved without an agitation device. Further, rigorous stirring helps keep the temperature homogenous throughout the slurry, thus allows efficient separation of a larger volume of slurry and higher productivity.

Continuous separation of a liquid product from a slurry in a slurry reactor in a continuous reaction operation has posed great challenges due to the breakdown of the catalyst particles into catalyst fines. This may lead to the clogging of the liquid product separation device by the catalyst fines, making the separation decreasingly efficient over time, or the gradual loss of the catalyst in the slurry system as the catalyst fines permeate through the separation device and are withdrawn along with the liquid product. Including liquid/solid separation devices in a reaction vessel decreases the volume available for reaction, and thus reduces productivity of the system.

Therefore, there is an unmet need to develop systems and methods for a continuous multiphase reaction/separation in a slurry reactor that avoid the drawbacks of the existing systems and methods and provide a long term stable and uninterrupted operation for high productivity.

### Summary of the Invention

In accordance with one aspect of the present invention, a method for continuously separating a liquid product from a slurry in a reaction vessel is provided. The method comprises the following:
(a) providing a system comprising a reaction vessel, a separation device, and an agitation device, wherein the separation device comprises a separation chamber and a filter element, wherein the filter element comprises a filter, wherein the filter is in contact with a slurry in the reaction vessel, and wherein a solid material from the slurry forms a filter cake on the surface of the filter in the reaction vessel;
(b) using the agitation device to generate a flow of the slurry in the reaction vessel; and
(c) maintaining a flux of a liquid product at a substantially constant level from the slurry in the reaction vessel across the filter and into the separation chamber.

In certain embodiments, the separation device of the method comprises a plurality of filter elements. In specific embodiments, the plurality of filter elements are connected.

In certain embodiments, the flux is maintained for at least 6 months. In other embodiments, the flux is maintained at 0.05 to 0.5 m³/h.m².

In one embodiment, the method further includes controlling the thickness of the filter cake. For example, the thickness of the filter cake may be maintained substantially constant. In some embodiments, the thickness of the filter cake may be maintained substantially constant in the range of 5 to 50 mm for at least 6 months.

In certain embodiments, the method further comprises maintaining a substantially constant pressure differential between the reaction vessel and the separation chamber. The pressure differential may be in the range of 0.1 to 3 bar, and preferably in the range of 0.2 to 2 bar.

In certain embodiments, the solid material is a catalyst having an average particle size of 1 to 250 micrometers in diameter.

In accordance with another aspect of the present invention, a system for continuously separating a liquid product from a slurry in a reaction vessel is provided. The system comprises the following:
(a) a reaction vessel, wherein a slurry comprising a liquid product and a solid material is present;
(b) a separation device, wherein the separation device comprises a separation chamber and a filter element, wherein the a filter element comprises a filter, wherein the filter is in contact with the slurry in the reaction vessel, and wherein the solid material forms a filter cake on the surface of the filter in the reaction vessel; and
(c) an agitation device, wherein the agitation device generates a flow of the slurry in the reaction vessel, and wherein a flux of the liquid product is maintained at a substantially constant level from the reaction vessel across the filter and into the separation chamber.

In certain embodiments, the system further comprises a means for maintaining a substantially constant pressure differential between the reaction vessel and the separation chamber.

In some embodiments, the thickness of the filter cake is in the range of 5 to 50 mm.

In certain embodiments, the separation device of the system comprises a plurality of filter elements. In specific embodiments, the plurality of filter elements are connected.

Other features and advantages of the invention will be apparent from the following figures, detailed description, and claims.

### Brief Description of Figures

**Figure 1:** Figure 1 illustrates an exemplary process diagram according to one embodiment of the present invention.
**Figures 2A-2C:** Figure 2 illustrate the structure of separation devices for separating a liquid product from a slurry according to some embodiments of the present invention. Figure 2A is a top view of a separation device, and Figure 2B is the corresponding side view of Figure 2A. Figure 2C depicts a top view of multiple separation devices arranged in a reaction vessel.

### Detailed Description

The present invention provides systems and methods for a continuous multiphase reaction and separation. The separation is achieved using one or more separation devices contained in a reaction vessel. Each separation device comprises a filter element which further comprises a filter which is in contact with the slurry in the reaction vessel. The separation device further compromises a separation chamber. The flux of the slurry passing from the reaction vessel into the separation chamber can be maintained at a desired level for a long period of time, and is suitable for uninterrupted industrial applications. These and other advantages and benefits provided by the present invention will be readily apparent to those skilled in the art based on the description herein and by referring to the drawings and examples.

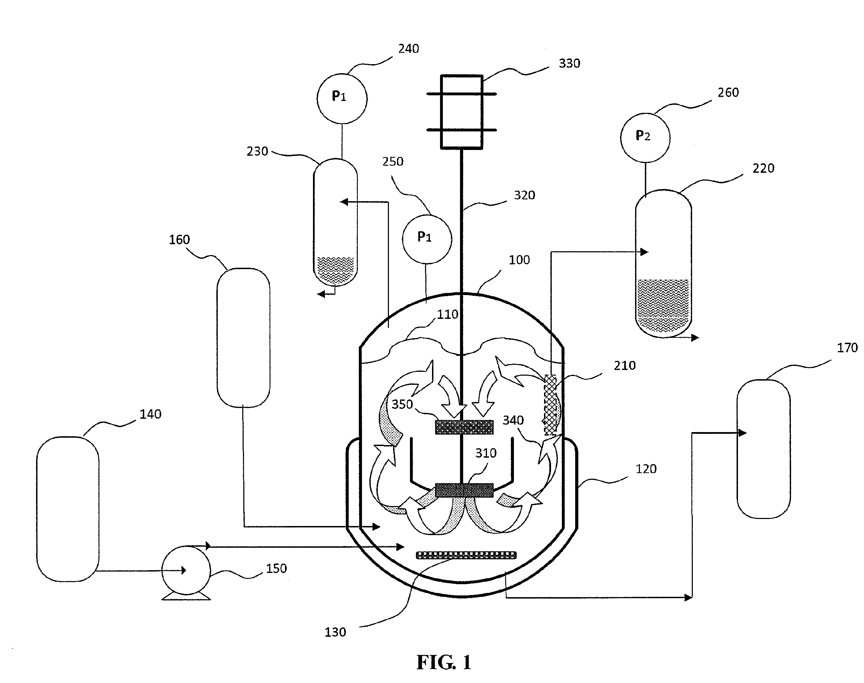

A schematic representation of a continuous reaction/separation reactor system of the present invention is shown in Figure 1. A reaction vessel 100 is provided to accommodate a volume of slurry. The slurry forms a surface 110, which is dynamic and may fluctuate with the motion of the slurry in the reaction vessel. The reaction vessel 100 is optionally partially enclosed by a jacket 120 for heat transfer purpose, either for removing the excess heat of the reaction system, or for providing extra heat to maintain a reaction temperature.

The reaction system of the present invention is suitable for a Fischer-Tropsch type reaction where one or two gases react to form a liquid product, as well as for a reaction where one of the reactants is a liquid. In the former case, the syngas may be introduced in a gas distributor 130 in the reaction vessel, preferably located near the bottom of the reaction vessel. In the latter case, the gas reactant may be introduced in a gas distributor 130 as above, and the liquid reactant from a liquid reactant container 140 may be introduced through a liquid reactant delivery pump 150. A fresh catalyst may be introduced from a catalyst container 160. The catalyst may gradually lose its activity during the continuous reaction/separation, and the deactivated catalyst may be removed through an outlet of the reaction vessel to a used catalyst container 170 without interrupting the continuous process of reaction/separation.

A separation device 210 is provided to continuously separate and withdraw the liquid product from the slurry in the reaction vessel. In one embodiment, the separation device comprises a filter element and a separation chamber. The filter element comprises a filter that is in contact with the slurry in the reaction chamber and provides filtration function. The filter may be a microporous substance with an average pore size in the order of below 1 millimeter, and more preferably with an average pore size below 100 microns, and even more preferably with an average pore size below 10 microns. The filter material may be selected from various materials, including, but not limited to sintered metal mesh, sintered metal powder, microporous metal membrane, sintered metal fiber microporous material, microporous ceramic, ceramic membrane, and any mixtures thereof. The filter element may take various shapes, including but not limited to, elongated slab or cylinder. The filter material may form a wall having a certain thickness enclosing a cavity in the interior of the filter element. Alternatively, the filter element may be substantially filled with a filter material. Practically, when a filter element takes the form of a cylinder with high axial length / diameter ratio, it is preferred to have a relatively thin wall composed of filter material with relatively large internal cavity for lower filtration resistance and improved separation efficiency.

The separation chamber, as used herein, refers to a space in the separation device for accommodating the liquid filtrate, the space being separated from the slurry in the reaction vessel by the filter. The separation chamber may be inside or outside the filter element. For example, if the filter material forms a wall having a certain thickness enclosing a cavity in the interior of the filter element, the cavity inside the filter element constitutes a separation chamber. Alternatively, when the filter element is substantially filled with the filter material, a separation chamber can be considered as formed outside the filter element, for example, in the conduit used to withdraw the liquid filtrate out of the separation device.

When the slurry in the reaction vessel is drawn to the separation device, the solid content (mainly catalyst particles) is blocked by the filter while the liquid in the slurry permeates through the filter into the separation chamber to form a filtrate. Some catalyst particles may deposit on the filter, while the remaining catalyst particles return to the slurry phase. The filtrate may then be withdrawn from an outlet of the separation chamber (via a conduit, such as a pipe) to an external condenser 220. As the gas reactant may also permeate through the filter and be withdrawn along with the liquid filtrate into the container 220, the condenser 220 may be maintained at a proper temperature and a proper pressure for separating the liquid and the gas. If one of the reactants is in the liquid state under the reaction conditions, the separated liquid filtrate may contain the liquid reactant in addition to the liquid product. Such a mixture of liquids may be subject to further separation.

The filtration process may be facilitated by providing a pressure differential between the reaction vessel and the interior of the separation chamber (the pressure in reaction vessel being greater than that in the separation chamber). The pressure differential may be regulated by the difference between pressure of the gas phase above the slurry surface in the reaction vessel and the gas pressure in the separation chamber. Therefore, the flux of filtrate (i.e., the amount of liquid filtrate permeating through unit area of the filter in unit time) can be regulated at least partially by adjusting the pressure differential. The gas pressure in the reaction vessel may be adjusted by changing the gas release rate in the gas distributor, or by adjusting the gas pressure above the slurry surface 110. Further, the gas phase above the slurry surface 110 may be connected in fluid communication to an external condenser 230 which is equipped with a gas pressure adjustment mechanism. In such a case, the pressure gauges 240 and 250, which measure the gas phase pressure in the condenser 230 and the gas phase pressure in the reaction vessel 100, respectively, will read substantially the same. Similarly, the gas pressure in the separation chamber may be adjusted by a mechanism in the condenser 220, which is in fluid communication with the separation chamber. In such a case, the gas pressure of the condenser 220 as read by pressure gauge 260 is equal to the gas pressure of the liquid filtrate in the separation chamber.

The system illustrated herein may be configured to maintain a pressure differential, for example, from 0.1 to 3 bar, and preferably from 0.2 to 2 bar. A higher pressure differential facilitates a greater flux of the filtrate across the filter and therefore leads to higher productivity. It is noted that the applicable pressure differential may be limited by the specific filter material used and/or the structural characteristics of the filter elements, and an exceedingly high pressure differential may cause damages to the filter elements and the instability of the separation process. For a stable and long-term continuous operation, it is preferred that the pressure differential between the reaction vessel and the separation chamber be maintained substantially constant.

A filter cake composed of solid particles in the reaction system, e.g., the catalyst particles, may build up on the surface of the filter (or penetrate into the filter element) as the filtration process proceeds. Such deposition, forming a filter cake, may clog the filter, increase filtration resistance, decrease filtration deficiency and eventually necessitate the stopping of the reaction process in order to clean or replace the separation device. However, the filter cake may also prevent small catalyst particles (smaller than the pore size of the filter material) from crossing the filter, thereby improving the filtrate quality (i.e., lower solid content) and facilitating catalyst reuse. The flux of liquid permeating into the separation chamber, which determines the productivity of the reaction/separation process, depends not only on the pressure differential as described above, but also on the characteristics of the filtrate material (e.g., an average pore size) and the characteristics of the filter cake (e.g., thickness, integrity, compactness, etc.). Maintaining consistent characteristics of the filter cake is desirable to achieve an optimal balance between the effectiveness of liquid/solid separation and the overall productivity of the reaction system.

The present invention provides an effective way to regulate the characteristics of the filter cake to avoid drawbacks. An agitation device is provided to generate a flow of the slurry inside the reaction vessel to help maintain a steady flux of liquid filtrate permeating into the separation chamber. Without being bound any particular theory, it is believed that the flow pattern of the slurry generated by the agitation device is crucial for the regulation of the characteristics of the filter cake. A certain flow pattern may be more efficacious in eroding or disintegrating a portion of the filter cake, whose build-up and disintegration may arrive at a balance such that the characteristics (such as thickness) of the filter cake can be maintained substantially constant. Such a pattern may include both an axial component and a radial component (with respect to the axis of a cylindrical reaction vessel). In the case where the filter element is installed substantially vertically (resulting a large surface area parallel to the axial direction), the higher the velocity of the axial flurry flow is in the vicinity of the separation device, the more effectively the filter cake can be disintegrated. Meanwhile, a radial flurry flow (i.e. the flow that is perpendicular to the filter surface) provides additional driving force for the permeation of a liquid component in the slurry into the separation chamber, thereby increasing the flux and improving the separation efficiency.

An agitation device for achieving such a regulatory effect may include a stirring component 310, preferably mounted at the lower end of the rotating shaft 320 of a mounted motor 330. The stirring component 310 creates a flow pattern as illustrated by the arrows 340, with substantial axial component that brushes against the surface of the separation device 210 from the bottom up. The stirring component 310 may be an impeller, such as a marine type Viscoprop, or any other suitable types, such as ISOJET, that can produce a sufficiently strong axial flow (i.e., a flow featuring a bottom to top motion) in a slurry having low to medium viscosities. The power of the agitation device may be adjusted to a level that enables a brushing motion of the flurry to regulate the characteristics (such as thickness) of the filter cake deposited on the separation device 210.

The agitation device may further include a second stirring component 350 configured above the impeller system 310. The second stirring component 350 may be a gas jet impeller. The gas jet impeller draws the gas phase from above the slurry surface 110 into a vacuum shaft and spurts the gas from the tip of the rotating blades, thereby forming strong shearing force in the slurry and helping create a flow pattern with a strong radial component.

The second stirring component 350 is especially useful when the reaction involves both a gas reactant and a liquid reactant because the fine gas bubbles produced by the second stirring component further improves the contact area between the gas reactant and the liquid reactant to facilitate their reaction. It may be powered by the same motor 330 that powers the first stirring component.

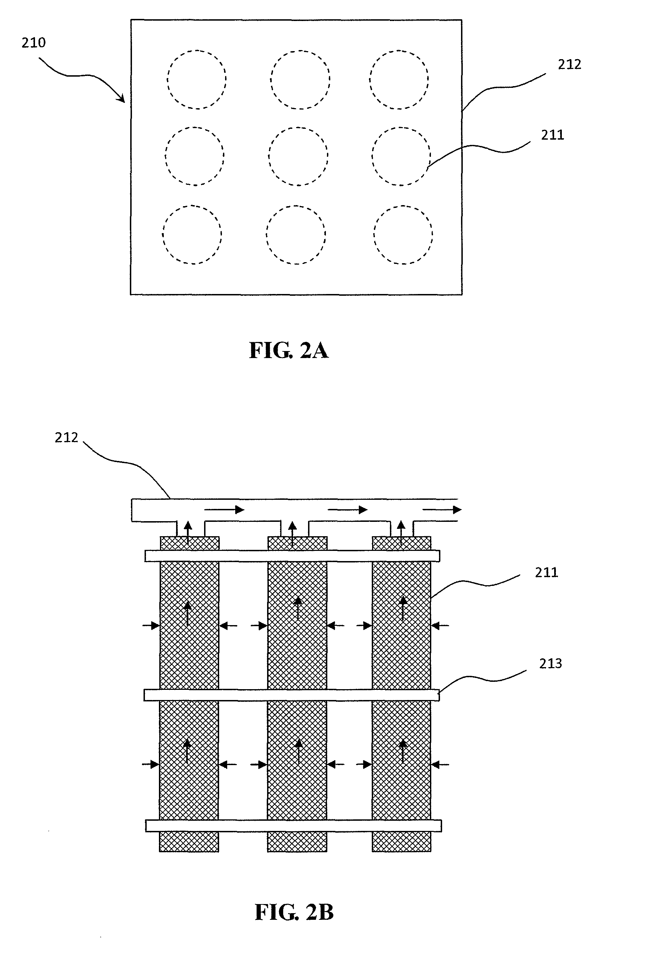

The separation device 210 may comprise multiple filter elements 211, all connected via fluid communication with a liquid collecting chamber 212, as illustrated in Figure 2A (top view) and Figure 2B (side view). In such a case, the separation chambers of the separation device are joined or merged with the liquid collecting chamber. The arrows in Figure 2B illustrate the direction in which liquid in the slurry permeates through the filter elements 211, enters the liquid collecting chamber 212, and then is transported to an outside condenser 220 (not shown). The multiple filter elements may be arranged substantially parallel to respect to each other to increase their packing density, and preferably substantially vertical (or parallel with the rotating shaft 320 of the agitation device). They may be secured by the holding means 213 (Figure 2B), which help maintain desired spacing between the filter elements and structural stability.

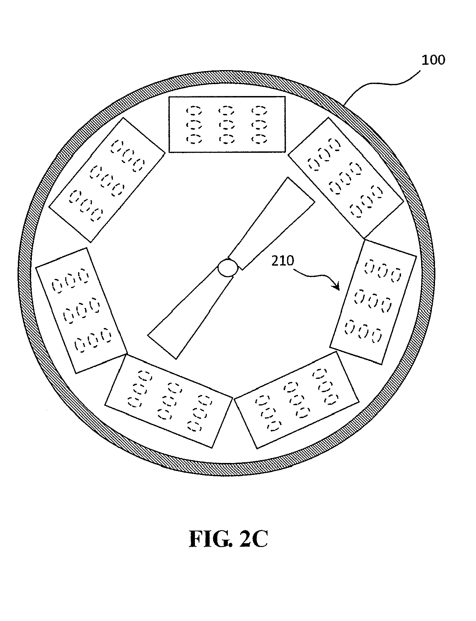

Further, multiple separation devices may be arranged in the reaction vessel, for example, along its circumference, as illustrated in Figure 2C. Using multitude of filters on one separation device and/or multitude of separation devices in one reaction vessel further increases the effective processing area of the separation device(s) and improves the separation efficiency.

Catalysts suitable for the present invention may be in the form of solid particles of 1-250 micrometers in diameter, and in a weight concentration of 5-50 % of the slurry phase. Catalysts may undergo further breakdown in the turbulent slurry, resulting in smaller catalyst particles than those initially fed into the reaction system.

The reaction/separation systems and methods described above allow a long term and stable operation at a desired productivity level. For example, by adjusting the pressure differential and the speed of the agitation device, the flux of the liquid filtrate across the filter into the separation chamber may be maintained at a substantially constant level, e.g., ranging from 0.05 to 0.5 m³/h.m², and preferably from 0.08 to 0.33 m³/h.m². Note that the substantially constant flux would dictate that the reactants are also fed into the reaction vessel at substantially constant level, such that the volume of the slurry in the reaction vessel are maintained for continuous and stable reaction. The substantially constant flux may be maintained for at least 6 months, preferably at least 12 months, without the need for backwashing the filter or halting the reaction for replacing or cleaning the filters. The thickness of the filter cake may be maintained substantially constant in the range of 5 to 50 mm, preferably 20 to 30 mm, and for at least 6 months, preferably at least 12 months. As the thickness of the filter cake may fluctuate with time, the pressure differential can be adjusted to maintain the substantial flux of filtrate across the separation device.

As used herein, the term "substantial" or "substantially", when modifying a quantity, means that the variation of a quantity does not exceed more than 10% of the value desired or pre-determined; in the absence of a given desired or predetermined value, the term means that the standard deviation of multiple measurements of the same quantity does not exceed 10% of the average of the multiple measurement results. When modifying a direction or parallelism, the term means that the deviation of the direction or parallelism does not exceed 10 degrees from that is desired or pre-determined.

### Examples

The following Examples merely illustrate some aspects of certain embodiments of the present invention. The scope of the invention is in no way limited by the embodiments exemplified herein.

### EXAMPLE 1. Sorbitol Hydrogenolysis

This Example illustrates the results of certain embodiments of the present invention as used in a continuous reaction/separation for sorbitol hydrogenolysis, the reactants of which include sorbitol and hydrogen gas. The conditions and results of 3 experiment setups, i.e., at laboratory scale, intermediate scale, and production scale for sorbitol hydrogenolysis are provided in the following Table 1. At the production scale, sorbitol hydrogenolysis was run for 6 months without interruption, during which time the temperature of the reaction system was kept stable, and no decreased efficiency of the separation device was observed. The pressure differential was kept substantially constant and the average catalyst activity and selectivity were also maintained substantially constant.

**Table 1. Conditions for sorbitol hydrogenolysis**

| | | **Laboratory scale** | **Intermediate Scale** | **Production Scale** |
|---|---|---|---|---|
| Volume of the reaction vessel (m³) | | 0.01 | 7 | 30 |
| Total Surface Area of Separation Devices (m²) | | 0.0041 | 16∼20 | 60 |
| Sorbitol feeding rate (m³/h) | | 0.003 | 2.4 | 24 |
| Temperature of slurry (°C) | upper portion | 235 | 242 | 233 |
| | middle portion | 235 | 244 | 231 |
| | bottom portion | 235 | 238 | 230 |
| Pressure of slurry (bar) | | 120 | 120 | 115 |
| Hydrogen Feed Rate (NM³/h) | | 0.38 | 800 | 9300 |
| Rev of Stirrer (r/min) | | 500 | 252 | 300 |
| Concentration of sorbitol feed (w/v%) | | 50 | 45 | 40 |
| Pressure differential (bar) | | 0∼1 | 0.2∼0.3 | 2 |

### EXAMPLE 2. Mixed Polyol Hydrogenolysis

In this Example, an intermediate scale experiment setup was employed, where the volume of the reaction vessel was 7 m³, and the aggregate surface area of the filters was 16.2 m². The reaction/separation was run continuously for 132 days, but in three stages. In the first 40 days, the reactants were sorbitol and hydrogen gas; from Day 41 to Day 80, the liquid reactant was changed to mixed polyols including sorbitol and glycerol, as well as their dimers, trimers and tetramers. On Day 81, the liquid reactant was switched back to pure sorbitol, and the reaction was continued till the end of Day 132. During the course of the 132-day period, the flux across the separation device was maintained at a constant of 2.45 m³/h, while the pressure differential was adjusted dynamically in the range of 0.20 bar to 0.40 bar to help maintain the constant flux. This constant flux roughly corresponded to the feeding rate of the liquid reactant(s) in the relevant stages.

The disclosures of all patents referred to in this application are hereby incorporated by reference in their entirety.

## Claims

1. A method for continuously separating a liquid product from a slurry in a reaction vessel, comprising
(a) providing a system comprising a reaction vessel, a separation device, and an agitation device, wherein the separation device comprises a separation chamber and a filter element, wherein the filter element comprises a filter, wherein the filter is in contact with a slurry in the reaction vessel, and wherein a solid material from the slurry forms a filter cake on the surface of the filter in the reaction vessel;
(b) using the agitation device to generate a flow of the slurry in the reaction vessel; and
(c) maintaining a flux of a liquid product at a substantially constant level from the slurry in the reaction vessel across the filter and into the separation chamber.

2. The method of claim 1, wherein the flux is maintained for at least 6 months.

3. The method of claim 1, wherein the flux is maintained in the range of 0.05 to 0.5 m³/h.m².

4. The method of claim 4, wherein the plurality of filter elements are connected.

5. The method of any one of the preceding claims comprising controlling the thickness of the filter cake.

6. The method of claim 5, wherein the thickness of the filter cake is maintained substantially constant.

7. The method of claim 6, wherein the thickness of the filter cake is maintained in the range of 5 to 50 mm for at least 6 months.

8. The method of any one of the preceding claims comprising maintaining a substantially constant pressure differential between the reaction vessel and the separation chamber.

9. The method of claim 8, wherein the pressure differential is in the range of 0.1 to 3 bar.

10. The method of claim 9, wherein the pressure differential is in the range of 0.2 to 2 bar.

11. The method of any one of the preceding claims wherein the solid material is a catalyst having an average particle size of 1 to 250 micrometers in diameter.

12. A system for continuously separating a liquid product from a slurry in a reaction vessel comprising:
(a) a reaction vessel, wherein a slurry comprising a liquid product and a solid material is present;
(b) a separation device, wherein the separation device comprises a separation chamber and a filter element, wherein the filter element comprises a filter, wherein the filter is in contact with the slurry in the reaction vessel, and wherein the solid material forms a filter cake on the surface of the filter in the reaction vessel; and
(c) an agitation device, wherein the agitation device generates a flow of the slurry in the reaction vessel, and wherein a flux of the liquid product is maintained at a substantially constant level from the reaction vessel across the filter and into the separation chamber.

13. The system of claim 12, comprising a means for maintaining a substantially constant pressure differential between the reaction vessel and the separation chamber.

14. The system of claim 12, wherein the separation device comprises a plurality of filter elements..

15. The system of claim 14, wherein the plurality of filter elements are connected.
